# EUROPÄISCHE PATENTSCHRIFT

(11) **EP 3 235 676 B1**
(45) Veröffentlichungstag und Bekanntmachung des Hinweises auf die Patenterteilung: **07.11.2018**
(21) Anmeldenummer: 17163746.5
(22) Anmeldetag: 30.03.2017
(51) Int. Cl.: B60L 7/18, B60L 11/18, B60L 15/20, B60W 30/00, B60L 11/00, B60T 8/17

(54) **REKUPERATIONSBREMSUNG AN EINEM FAHRZEUG**
RECUPERATION BRAKING ON A VEHICLE
FREINAGE DE RÉCUPÉRATION SUR UN VÉHICULE

(30) Priorität: 20.04.2016 DE 102016004755
(43) Veröffentlichungstag der Anmeldung: 25.10.2017
(73) Patentinhaber: AUDI AG, 85045 Ingolstadt (DE)
(72) Erfinder: Karl, Bernhard, 85080 Gaimersheim (DE); Feldmann, Uwe, 85128 Nassenfels (DE); Winkelmeyr, Felix, 85057 Ingolstadt (DE); Daschner, René, 85053 Ingolstadt (DE); Heckel, Thomas, 85049 Ingolstadt (DE)

(56) Entgegenhaltungen:
- DE-A1-102013 215 763
- GB-A- 2 483 375
- JP-A- 2006 321 397
- US-A1- 2007 069 673

## Beschreibung

Die vorliegende Erfindung betrifft ein Verfahren zum rekuperationsbasierten Bremsen eines Fahrzeugs sowie ein zur Durchführung des Verfahrens konfiguriertes Fahrzeug.

Beim Bremsen eines Fahrzeugs entstehende Energie kann mittels einer in einem Rekuperationsmodus arbeitenden elektrischen Maschine in elektrische Energie umgewandelt werden, so dass zum einen elektrische Energie bereitgestellt wird, die zu einem späteren Zeitpunkt wiederum zum Antrieb des Fahrzeugs genutzt werden kann, und zum anderen ein negatives Drehmoment erzeugt wird, mittels dessen das Fahrzeug verzögert werden kann und jeweilige Reibbremsen entsprechend entlastet werden können.

Steht eine Rekuperationsleistung einer jeweiligen elektrischen Maschine verlässlich und konstant zur Verfügung, kann eine Reibbremsanlage eines Fahrzeugs gegenüber traditionellen Aufbauten ohne Rekuperationsunterstützung kleiner und damit leichter konstruiert werden, so dass ein entsprechendes Fahrzeug leichter und, dadurch bedingt, dynamischer bzw. effizienter ausgestaltet werden kann.

Da für den Fall, dass eine Versorgungsbatterie bzw. eine Antriebsbatterie eines Fahrzeugs komplett geladen ist, eine Rekuperationsbremsung nicht mehr zur Verfügung steht, besteht Bedarf, eine Möglichkeit zu finden, einen ständig verfügbaren Betrieb einer rekuperationsunterstützen Bremse zu gewährleisten.

In der deutschen Druckschrift DE 10 2005 051433 A1 wird ein Verfahren zum geschwindigkeitsabhängigen Entladen eines Kondensators zur Aufnahme von durch einen Rekuperationsvorgang erzeugter elektrischer Energie beschrieben.
Ein Verfahren zum Verwalten eines Ladezustands einer Batterie eines Fahrzeugs ist in der deutschen Druckschrift DE 10 2009 019527 A1 beschrieben.
Die deutsche Druckschrift DE 10 2014 116703 A1 offenbart ein Verfahren zum Steuern eines regenerativen Bremsvorgangs eines Fahrzeugs, bei dem in Abhängigkeit von Weginformationen Segmente einer Route ermittelt werden, die zum Laden bzw. Entladen einer Batterie geeignet sind. US2007069673 offenbart ein Verfahren zum rekuperationsbasierten Bremsen eines Fahrzeugs mit zwei elektrischen Maschinen. Ein Überladen der Antriebsbatterie wird dadurch verhindert, dass ein Widerstand zwischen den neutralen Knoten der zwei Maschinen eingesetzt wird. DE102013215763 offenbart ein Verfahren zum rekuperationsbasierten Bremsen eines Fahrzeugs in Abhängigkeit des Ladezustands der Antriebsbatterie und wobei die Fahrzeuggeschwindigkeit mit einer Plugging-Grenze verglichen wird.

Vor diesem Hintergrund wird ein Verfahren zum rekuperationsbasierten Bremsen eines Fahrzeugs vorgestellt, bei dem eine mittels einer ersten elektrischen Maschine während eines Bremsvorgangs erzeugte elektrische Energie durch Betreiben mindestens einer zweiten elektrischen Maschine des Fahrzeugs in einem Nullschlupfmodus abgebaut wird, um ein Überladen einer Antriebsbatterie des Fahrzeugs zu verhindern.
Ausgestaltungen ergeben sich aus der Beschreibung und den abhängigen Ansprüchen.
Das vorgestellte Verfahren dient insbesondere zum Ermöglichen eines konstant rekuperationsbasierten Betriebs einer Fahrzeugbremse. Dazu ist erfindungsgemäß vorgesehen, dass eine jeweilige während eines rekuperationsbasierten Betriebs einer Fahrzeugbremse, d. h. beim Bremsen mit einer elektrischen Maschine, erzeugte Energie solange in eine Antriebsbatterie bzw. einen Energiespeicher eines jeweiligen Fahrzeugs eingespeist wird, bis die Antriebsbatterie zu einem vorgegebenen Schwellenwert geladen ist. Für den Fall, dass die Antriebsbatterie bis zu dem vorgegebenen Schwellenwert geladen ist, ist erfindungsgemäß vorgesehen, dass die erzeugte elektrische Energie mittels eines Betriebs mindestens einer zweiten elektrischen Maschine in einem Nullschlupfmodus abgebaut wird. Durch den Abbau der elektrischen Energie mittels des Betriebs der mindestens einen zweiten elektrischen Maschine in dem Nullschlupfmodus kann ein Überladen der Antriebsbatterie bei andauernder Rekuperation verhindert und/oder ein Zwischenspeicher zum Aufnehmen von durch zukünftige Rekuperationsvorgänge zu erzeugender elektrischer Energie bereitgestellt werden. Entsprechend ist unter Verwendung des vorgestellten Verfahrens ein kontinuierlicher rekuperationsgestützter Bremsbetrieb möglich.

Mittels des erfindungsgemäßen Verfahrens ist es möglich, ein durch einen Rekuperationsbetrieb erzeugtes negatives Drehmoment, d.h. einen rekuperationsbedingten Verzögerungswert, konstant, verlässlich und wiederholt bereitzustellen, so dass eine Fahrzeugbremsanlage an jeweilige durch das konstant verfügbare rekuperationsbedingte negative Drehmoment gegenüber traditionellen Spezifikationen geänderte Spezifikationen angepasst, d. h. insbesondere durch Verwendung von gegenüber einem traditionellen Fahrzeug ohne rekuperationsbasierte Bremsunterstützung kleineren und leichteren Reibbremsen, konstruiert werden kann.

Unter einem Nullschlupfmodus ist im Kontext der vorliegenden Erfindung ein Betriebsmodus einer elektrischen Maschine zu verstehen, bei dem die elektrische Maschine genutzt wird, um elektrische Energie zu verbrauchen, ohne dass die elektrische Maschine ein jeweiliges Fahrzeug antreibt, d.h. ein positives Drehmoment erzeugt bzw. an die Räder abgibt. Ein Nullschlupfmodus kann bspw. dadurch erreicht werden, dass ein Drehfeld eines Stators einer jeweiligen elektrischen Maschine, einer Läuferdrehzahl, d.h. einer Bewegung eines Läufers der elektrischen Maschine, synchron folgt, so dass Leerlaufverluste der elektrischen Maschine genutzt werden, um elektrische Energie abzubauen und dadurch die Batterie gezielt zu entladen, wobei kein Drehmoment an die Räder abgegeben wird.

Es ist denkbar, dass die erfindungsgemäß vorgesehene erste elektrische Maschine und die erfindungsgemäß vorgesehene mindestens eine zweite elektrische Maschine identisch sind oder als erste elektrische Maschine und mindestens eine zweite elektrische Maschine unterschiedliche elektrische Maschinen gewählt werden.

Es ist insbesondere vorgesehen, dass bei einer rekuperationsunterstützten Bremsung eine Reibbremse mittels einer in einen Rekuperationsmodus geschalteten elektrischen Maschine unterstützt wird, so dass die elektrische Maschine zumindest einen Teil einer von einem Nutzer angeforderten Bremskraft durch Umwandlung von während eines Bremsvorgangs erzeugter mechanischer Energie in elektrische Energie bereitstellt.

In einer möglichen Ausgestaltung des vorgestellten Verfahrens ist vorgesehen, dass die während des Bremsvorgangs erzeugte elektrische Energie in Abhängigkeit eines aktuellen Ladezustands der Antriebsbatterie des Fahrzeugs mittels eines Betreibens der mindestens einen zweiten elektrischen Maschine in einem Nullschlupfmodus abgebaut oder zu der Antriebsbatterie des Fahrzeugs übertragen und dort gespeichert wird.

Um eine jeweilige Menge an bei einem Bremsvorgang erzeugter elektrischer Energie durch einen dauerhaften Nullschlupfbetrieb, d. h. einen Betrieb einer jeweiligen elektrischen Maschine in einem Nullschlupfmodus, nicht unnötig zu verschwenden, ist in Ausgestaltung vorgesehen, dass die Menge an elektrischer Energie nur dann mittels einer in den Nullschlupfmodus geschalteten elektrischen Maschine abgebaut wird, wenn eine Antriebsbatterie oberhalb eines im Voraus bereitzustellenden Schwellenwerts, wie bspw. 98% geladen ist und ein weiteres Laden zu einem Schaden der Batterie und, dadurch bedingt, zu einem zumindest eingeschränkten Betrieb oder vollständigen Ausfall der Bremsfähigkeit der elektrischen Maschine führen würde. Entsprechend ist vorgesehen, dass ein Ladezustand der Antriebsbatterie bzw. eines entsprechenden Energiespeichers kontinuierlich überwacht und als Eingangsgröße für eine Steuerungseinheit verwendet wird, die einen Abbau von elektrischer Energie mittels einer in den Nullschlupfmodus zu schaltenden elektrischen Maschine regelt.

In einer weiteren möglichen Ausgestaltung des vorgestellten Verfahrens ist vorgesehen, dass die während des Bremsvorgangs erzeugte elektrische Energie zunächst in einen Pufferspeicher übertragen und anschließend durch Betreiben mindestens einer zweiten elektrischen Maschine des Fahrzeugs in einem Nullschlupfmodus abgebaut wird.

Durch Verwendung eines Pufferspeichers ist es möglich, ein zeitliches Moment bei einer Steuerung einer Entladung einer Batterie einzufügen. Dies bedeutet, dass mittels eines Pufferspeichers eine große Menge an elektrischer Energie aus einer Antriebsbatterie entnommen oder von einer zur Rekuperation genutzten elektrischen Maschine aufgenommen werden kann und zu einem späteren Zeitpunkt bzw. über einen gegenüber einem jeweiligen Bremsvorgang längeren Zeitraum mittels einer in den Nullschlupfmodus geschalteten elektrischen Maschine abgebaut werden kann.

In einer weiteren möglichen Ausgestaltung des vorgestellten Verfahrens ist vorgesehen, dass der Pufferspeicher als Teil der Antriebsbatterie des Fahrzeugs ausgestaltet ist, wobei der Pufferspeicher als Teil der Antriebsbatterie des Fahrzeugs ausgestaltet ist, und bei dem der Pufferspeicher dynamisch durch Betreiben der mindestens einen zweiten elektrischen Maschine des Fahrzeugs in einem Nullschlupfmodus dann entladen wird, wenn kein Raddrehmoment (positiv oder negativ) angefordert wird oder während eine Reibbremse ohne Rekuperationsbremsunterstützung aktiv ist. Dadurch kann der Pufferspeicher für Rekuperationsbremsungen immer vorgehalten werden. Dies ist insbesondere bei längeren Bergabfahrten von Bedeutung.

Um ein jeweiliges Fahrzeug auf eine Situation vorzubereiten, in der besonders viel elektrische Energie durch Rekuperationsvorgänge bereitgestellt wird, wie bspw. bei einer Bergabfahrt, kann ein Abbau von elektrischer Energie aus einer Antriebsbatterie bzw. eine Verteilung von elektrischer Energie aus der Antriebsbatterie in einen Pufferspeicher zum Abbau durch eine in den Nullschlupfmodus geschaltete elektrische Maschine dynamisch in Abhängigkeit von bestimmten Fahrsituationen, wie bspw. bei einem Betrieb des Fahrzeugs mit aktiver Reibbremse und/oder ohne angefordertes Antriebsmoment erfolgen.

Es ist denkbar, dass durch eine Anpassung des Schwellenwerts eines Ladezustands der Antriebsbatterie zur Aktivierung des erfindungsgemäßen Verfahrens, bspw. in Abhängigkeit von Anzahl und Stärke jeweiliger Bremsungen, ein präventives Entladungsmanagement betrieben wird, bei dem auch in Zeiten, in denen keine Energie durch einen Rekuperationsvorgang bereitgestellt wird, elektrische Energie abgebaut wird, um einen Puffer für spätere Anforderungen zur Aufnahme von elektrischer Energie bereitzustellen.

In einer weiteren möglichen Ausgestaltung des vorgestellten Verfahrens ist vorgesehen, dass die mindestens eine zweite elektrische Maschine, die zum Abbau der elektrischen Energie in den Nullschlupfmodus geschaltet wird, der ersten elektrischen Maschine entspricht, mittels derer die elektrischen Energie während des Bremsvorgangs erzeugt wurde.

Insbesondere bei Fahrzeugen, die einachsig angetrieben werden, steht häufig nur eine elektrische Maschine zur Verfügung, so dass diese elektrische Maschine sowohl zum Erzeugen von elektrischer Energie durch einen Rekuperationsvorgang als auch zum Abbau der durch den Rekuperationsvorgang erzeugten elektrischen Energie verwendet werden muss. Dazu ist vorgesehen, dass mittels der elektrischen Maschine im Nullschlupfmodus eine Antriebsbatterie eines jeweiligen Fahrzeugs stets bis unter einen vorgegebenen Schwellenwert entladen wird, so dass ein Pufferspeicher entsteht, der zur Aufnahme von bei einem späteren Rekuperationsvorgang erzeugter Energie verwendet werden kann. Selbstverständlich kann der Pufferspeicher auch außerhalb der Antriebsbatterie, bspw. in Form eines Kondensators vorgesehen sein.
In einer weiteren möglichen Ausgestaltung des vorgestellten Verfahrens ist vorgesehen, dass für den Fall, dass das Fahrzeug mindestens zwei elektrisch angetriebene Achsen umfasst, während des Bremsvorgangs mittels einer der ersten Achse zugeordneten elektrischen Maschine während eines Rekuperationsbetriebs erzeugte elektrische Energie durch Betreiben einer der entsprechend zweiten Achse zugeordneten elektrische Maschine in einem Nullschlupfmodus abgebaut wird.

Sobald mehrere elektrische Maschinen zur Verfügung stehen, wie es regelmäßig bei mehrachsig angetriebenen Fahrzeugen der Fall ist, können jeweilige elektrische Maschinen in einem Wechselbetrieb betrieben werden, bei dem eine erste elektrische Maschine in einem Rekuperationsbetrieb elektrische Energie erzeugt und eine weitere elektrische Maschine die von der ersten elektrischen Maschine erzeugte elektrische Energie abbaut, ohne das Fahrzeug anzutreiben und, dadurch bedingt, indirekt über den Rekuperationsbetrieb der ersten elektrischen Maschine eine Erzeugung von Bremsenergie zur Verzögerung des Fahrzeugs ermöglicht.

Selbstverständlich ist es denkbar, dass bei einer Ausführung des vorgestellten Verfahrens unter Verwendung mehrerer elektrischer Maschinen alle elektrischen Maschinen kurzzeitig in einen Rekuperationsbetrieb geschaltet werden können, um eine besonders hohe Verzögerungsleistung zu erzielen, wie sie bspw. für eine Notbremsung erforderlich ist. Dazu kann bspw. ein Schwellenwert einer Pedalstellung vorgegeben sein, bei dessen Überschreitung eine Notbremsregelung ausgeführt wird und alle elektrischen Maschinen in den Rekuperationsbetrieb geschaltet werden.

In einer weiteren möglichen Ausgestaltung des vorgestellten Verfahrens ist vorgesehen, dass die mittels der der ersten Achse zugeordneten elektrischen Maschine erzeugte elektrische Energie direkt von der der zweiten Achse zugeordneten elektrischen Maschine abgebaut wird.

Es ist denkbar, dass die erste elektrische Maschine und die mindestens eine zweite elektrische Maschine in ihren Leistungsabgaben bzw. Leistungsanforderungen exakt aufeinander abgestimmt werden, so dass auf einen Pufferspeicher komplett verzichtet werden kann und eine jeweilige Menge an durch die in einem Rekuperationsmodus betriebene erste elektrische Maschine erzeugter elektrischer Energie direkt, d. h. ohne einen Zwischenspeicher, durch Betreiben der mindestens einen zweiten elektrischen Maschine in einem Nullschlupfmodus abgebaut wird.

In einer weiteren möglichen Ausgestaltung des vorgestellten Verfahrens ist vorgesehen, dass mittels der der ersten Achse zugeordneten elektrischen Maschine exakt soviel elektrische Energie erzeugt wird, wie anschließend von der der zweiten Achse zugeordneten elektrischen Maschine abgebaut werden kann.

Durch eine Anpassung einer Rekuperationsleistung an eine nullschlupfbedingte Abbauleistung von elektrischer Energie kann ein dauerhafter "elektrisch neutraler" Betrieb erfolgen, bei dem keine elektrische Energie angesammelt wird.

Gemäß einer beispielhaften Ausführungsform des vorgestellten Verfahrens ist vorgesehen, dass bei einem vollständig geladenen Fahrzeug, das beim Bergabfahren mittels eines Rekuperationsbetriebs einer elektrischen Maschine des Fahrzeugs verzögert werden soll, zunächst überprüft wird, ob seitens eines Fahrers des Fahrzeugs ein Wunsch zur Drehmomenterzeugung bzw. zur Leistungsabgabe durch die elektrische Maschine besteht. Sollte der Fahrer bspw. mittels einer Reibbremse bremsen oder das Fahrzeug in einem "Segelbetrieb" bzw. Freimodus, d. h. ohne zu erzeugendes Drehmoment, betreiben wollen, so kann die elektrische Maschine in den Nullschlupfbetrieb geschaltet und die Batterie des Fahrzeugs dadurch entladen werden, so dass durch den Rekuperationsbetrieb erzeugte elektrische Energie wieder zu der Batterie übertragen werden kann.

Ferner betrifft die vorliegende Erfindung ein Fahrzeug mit einem Steuergerät und mindestens einer elektrischen Maschine, wobei das Steuergerät dazu konfiguriert ist, mittels bei einem rekuperationsunterstützten Bremsvorgang von einer ersten elektrischen Maschine erzeugter elektrischer Energie mindestens eine zweite elektrische Maschine des Fahrzeugs in einem Nullschlupfmodus zu betreiben und die elektrische Energie dadurch abzubauen.

Das vorgestellte Verfahren dient insbesondere zum Betrieb des vorgestellten Fahrzeugs.

In einer weiteren möglichen Ausgestaltung des vorgestellten Fahrzeugs ist vorgesehen, dass das Steuergerät weiterhin dazu konfiguriert ist, die elektrische Energie in Abhängigkeit eines Ladezustands einer Antriebsbatterie des Fahrzeugs durch Schalten der mindestens einen zweiten elektrischen Maschine in einen Nullschlupfmodus abzubauen.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt eine schematische Darstellung einer möglichen Ausgestaltung des vorgestellten Verfahrens.
Figur 2 zeigt eine schematische Darstellung eines Fahrzeugs mit einem Steuergerät, das zur Durchführung einer möglichen Ausgestaltung des vorgestellten Verfahrens konfiguriert ist.

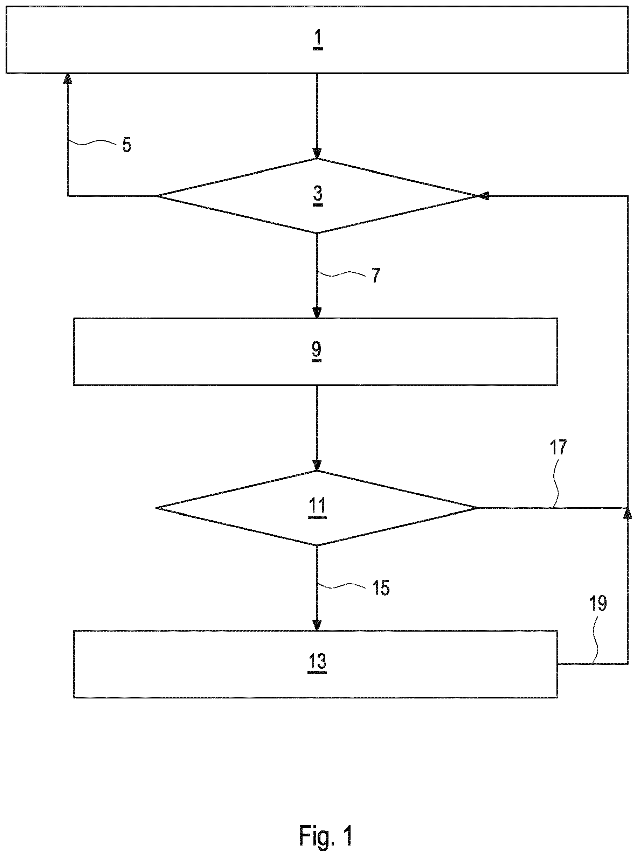

In Figur 1 ist ein Flussdiagramm zur Regelung eines Rekuperationsbetriebs einer elektrischen Maschine eines Fahrzeugs dargestellt.

Für eine rekuperationsbasierte Bremsung, d. h. eine Bremsung, bei der eine elektrische Maschine, die in einem Rekuperationsbetrieb, d. h. einem Betrieb, bei dem durch die Bremsung erzeugte mechanische Energie in elektrisch Energie umgewandelt wird, wird zunächst in einem Schritt 1 überprüft, ob der Rekuperationsbetrieb zur rekuperationsbasierten Bremsung freigegeben werden kann, und ob ein Nullschlupfbetrieb, d. h ein Betrieb der elektrischen Maschine in einem Nullschlupfmodus, in dem kein Antriebsmoment durch die elektrische Maschine erzeugt wird, jedoch elektrische Energie abgebaut wird, erforderlich ist. Dazu wird in einem Schritt 3 überprüft, ob ein Ladezustand einer Batterie, wie bspw. einer Antriebsbatterie des Fahrzeugs, unterhalb eines Schwellenwerts von bspw. 98% liegt, so dass durch den Rekuperationsbetrieb erzeugte elektrische Energie zu der Antriebsbatterie übertragen werden kann.
Sollte der Ladezustand der Antriebsbatterie unterhalb des Schwellenwerts von 98% liegen, so wird der Rekuperationsbetrieb ohne einen Nullschlupfbetrieb der elektrischen Maschine freigegeben, wie durch Pfeil 5 angedeutet, und entsprechend erzeugte elektrische Energie zu der Antriebsbatterie übertragen.

Sollte der Ladezustand der Antriebsbatterie oberhalb des Schwellenwerts von 98% liegen, wie durch Pfeil 7 angedeutet, so ist der Rekuperationsbetrieb gemäß Regel 9 verboten. Um den Rekuperationsbetrieb dennoch freizugeben, ist zunächst in einem Schritt 11 zu beurteilen, ob seitens eines jeweiligen Fahrers ein Nullmoment, d. h. ein "Segelbetrieb", angefordert wird.

Sollte der Fahrer ein Nullmoment angefordert haben, wie durch Pfeil 15 angedeutet, und die elektrische Maschine entsprechend für einen Nullschlupfbetrieb zur Verfügung stehen, wird die elektrische Maschine in einem Schritt 13 in den Nullschlupfbetrieb geschaltet, um elektrische Energie aus der Antriebsbatterie abzubauen und einen Pufferspeicher für durch den Rekuperationsbetrieb erzeugte elektrische Energie bereitzustellen.
Sollte der Fahrer kein Nullmoment anfordern bzw. von der elektrischen Maschine Antriebsenergie anfordern, ist, wie durch Pfeil 17 angedeutet, erneut in Schritt 3 zu prüfen, ob der Ladezustand der Antriebsbatterie oberhalb des Schwellenwerts von 98% liegt. Sobald der Ladezustand der Antriebsbatterie unter 98% fällt, wird der Rekuperationsbetrieb ohne einen Nullschlupfbetrieb der elektrischen Maschine freigegeben, wie durch Pfeil 5 angedeutet. Solange der Ladezustand der Antriebsbatterie oberhalb 98% liegt, wird entweder in den Nullschlupfmodus geschaltet oder in Reaktion auf eine Anforderung des Fahrers die elektrische Maschine zur Erzeugung von Drehmoment verwendet, wodurch die Antriebsbatterie ebenfalls teilweise entladen wird.

Der Nullschlupfbetrieb kann für einen vorgegebenen Zeitraum oder bis zu einem vorgegebenen Schwellenwert des Ladezustands der Antriebsbatterie durchgeführt werden. Jedenfalls endet der Nullschlupfbetrieb dann, wenn der Fahrer Drehmoment von der elektrischen Maschine anfordert, woraufhin der Ablauf erneut mit der Überprüfung des Ladezustands der Antriebsbatterie gemäß Schritt 3 startet, wie durch Pfeil 19 angedeutet. Um eine Bremsung bei einem Ladezustand der Antriebsbatterie, der oberhalb 98% liegt, verlässlich durchzuführen und eine Überladung der Antriebsbatterie durch einen Rekuperationsbetrieb zu verhindern, kann vorgesehen sein, dass lediglich eine Reibbremse zur Bremsung verwendet wird. Dabei kann jedoch, je nach Stärke einer jeweiligen durch einen Nutzer angeforderten Bremskraft, ein Notbetrieb aktiviert werden, in dem unabhängig von dem Ladezustand der Antriebsbatterie dennoch eine rekuperationsbasierte Bremsung durchgeführt wird.

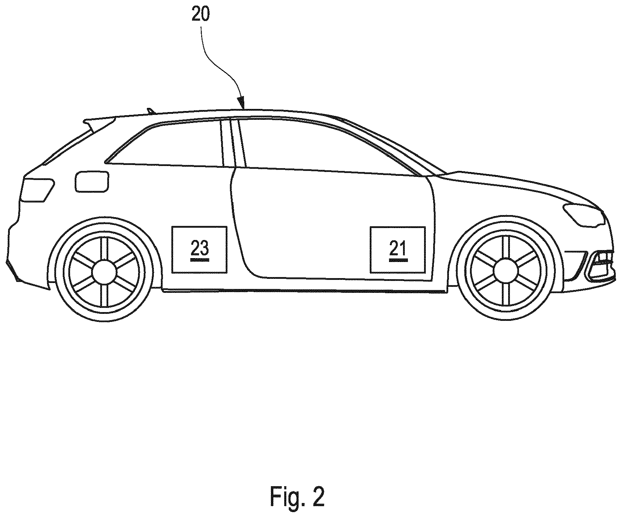

Figur 2 zeigt ein Fahrzeug 20 mit einer ersten elektrischen Maschine 21 und einer Antriebsbatterie 23. Um das Fahrzeug 20 dauerhaft mit einer rekuperationsbasierten Bremsung zu verzögern, ist es erforderlich, dass die Antriebsbatterie nicht über einen Ladezustand von 98% geladen wird.

Um bei bspw. einer Bergabfahrt, bei der der Antriebsbatterie 23 aufgrund zahlreicher Bremsmanöver kontinuierlich elektrische Energie zugeführt wird, die Antriebsbatterie 23 nicht über den Ladezustand von 98% zu laden, ist vorgesehen, dass die elektrische Maschine 21 immer dann, wenn diese nicht zum Erzeugen von Antriebsmoment oder für einen Rekuperationsbetrieb genutzt wird, und bspw. eine Reibbremse ohne Rekuperationsbremsunterstützung aktiv ist, in einen Nullschlupfmodus geschaltet wird, in dem die elektrische Maschine 21 elektrische Energie verbraucht, jedoch kein Drehmoment erzeugt, so dass der Antriebsbatterie 23 elektrische Energie entnommen wird und Kapazität zur Aufnahme von bei zukünftigen Bremsmanövern zu erzeugender elektrischer Energie in einem durch die Antriebsbatterie 23 bereitgestellten Pufferspeicher besteht.

## Patentansprüche

1. Verfahren zum rekuperationsbasierten Bremsen eines Fahrzeugs (20), bei dem eine mittels einer ersten elektrischen Maschine (21) während eines Bremsvorgangs erzeugte elektrische Energie abgebaut wird, um dadurch ein Überladen einer Antriebsbatterie (23) des Fahrzeugs zu verhindern, **dadurch gekennzeichnet, dass** die elektrische Energie abgebaut wird durch Betreiben mindestens einer zweiten elektrischen Maschine (21) des Fahrzeugs (20) in einem Nullschlupfmodus, in dem ein Drehfeld eines Stators der zweiten elektrischen Maschine (21) einer Bewegung eines Läufers der zweiten elektrischen Maschine (21) synchron folgt, so dass Leerlaufverluste der zweiten elektrischen Maschine (21) genutzt werden, um die elektrische Energie abzubauen.

2. Verfahren nach Anspruch 1, bei dem während des Bremsvorgangs erzeugte elektrische Energie mittels des Betreibens der mindestens einen zweiten elektrischen Maschine (21) in einem Nullschlupfmodus abgebaut wird, wenn die Antriebsbatterie (23) des Fahrzeugs (20) oberhalb eines im Voraus bereitzustellenden Schwellenwerts geladen ist, oder zu der Antriebsbatterie (23) des Fahrzeugs (20) übertragen wird, wenn die Antriebsbatterie (23) des Fahrzeugs (20) unterhalb des Schwellenwerts geladen ist.

3. Verfahren nach einem der voranstehenden Ansprüche, bei dem die während des Bremsvorgangs erzeugte elektrische Energie zunächst in einen Pufferspeicher übertragen und anschließend durch Betreiben der mindestens einen zweiten elektrischen Maschine (21) des Fahrzeugs in einem Nullschlupfmodus abgebaut wird.

4. Verfahren nach Anspruch 3, bei dem die mindestens eine zweite elektrische Maschine (21), die zum Abbau der elektrischen Energie in den Nullschlupfmodus geschaltet wird, der ersten elektrischen Maschine (21) entspricht, mittels derer die elektrische Energie während des Bremsvorgangs erzeugt wurde.

5. Verfahren nach einem der voranstehenden Ansprüche, bei dem für den Fall, dass das Fahrzeug (20) mindestens zwei elektrisch angetriebene Achsen umfasst, während des Bremsvorgangs mittels einer der ersten Achse zugeordneten ersten elektrischen Maschine (21) erzeugte elektrische Energie durch Betreiben mindestens einer der zweiten Achse zugeordneten zweiten elektrische Maschine (21) in einem Nullschlupfmodus abgebaut wird.

6. Verfahren nach Anspruch 5, bei dem die mittels der der ersten Achse zugeordneten ersten elektrischen Maschine (21) erzeugte elektrische Energie direkt von der mindestens einen der zweiten Achse zugeordneten zweiten elektrischen Maschine (21) abgebaut wird.

7. Verfahren nach Anspruch 5 oder 6, bei dem mittels der der ersten Achse zugeordneten ersten elektrischen Maschine (21) exakt soviel elektrische Energie erzeugt wird, wie anschließend von der mindestens einen der zweiten Achse zugeordneten zweiten elektrischen Maschine (21) abgebaut werden kann.

8. Fahrzeug (20) mit einem Steuergerät und mindestens einer elektrischen Maschine (21), wobei das Steuergerät dazu konfiguriert ist, bei einem rekuperationsunterstützten Bremsvorgang von einer ersten elektrischen Maschine (21) erzeugte elektrische Energie abzubauen und dadurch ein Überladen einer Antriebsbatterie (23) des Fahrzeugs (20) zu verhindern, **dadurch gekennzeichnet, dass** das Steuergerät dazu konfiguriert ist, mindestens eine zweite elektrische Maschine (21) des Fahrzeugs (20) in einem Nullschlupfmodus zu betreiben, bei dem ein Drehfeld eines Stators der mindestens einen zweiten elektrischen Maschine (21) einer Bewegung eines Läufers der mindestens einen zweiten elektrischen Maschine (21) synchron folgt, so dass Leerlaufverluste der mindestens einen zweiten elektrischen Maschine (21) genutzt werden, um elektrische Energie abzubauen, wenn die Antriebsbatterie (23) des Fahrzeugs (20) oberhalb eines im Voraus bereitzustellenden Schwellenwerts geladen ist.

## Claims

1. Method for recuperation braking on a vehicle (20), wherein electrical energy generated by means of a first electric machine (21) during a braking process is dissipated, to prevent overcharging of a drive battery (23) of the vehicle, **characterised in that** the electrical energy is also dissipated by operating at least a second electric machine (21) of the vehicle (20) in zero slip mode, wherein a rotating field of a stator of the second electric machine (21) synchronously follows a movement of a rotor of the second electric machine (21), such that no-load losses of the second electric machine (21) are used to dissipate the electrical energy.

2. Method according to claim 1, wherein the electrical energy generated during the braking process is dissipated by operating the at least one second electric machine (21) in zero slip mode, when the drive battery (23) of the vehicle (20) is charged above a pre-set threshold value, or is transferred to the drive battery (23) of the vehicle (20), when the drive battery (23) of the vehicle (20) is charged below the threshold value.

3. Method according to any one of the preceding claims, wherein the electrical energy generated during the braking process is first transferred to a buffer storage and subsequently dissipated by operating the at least one second electric machine (21) of the vehicle in zero slip mode.

4. Method according to claim 3, wherein the at least one second electric machine (21), which is switched to zero slip mode in order to dissipate the electrical energy, corresponds to the first electric machine (21), by means of which the electrical energy is generated during the braking process.

5. Method according to any one of the preceding claims, wherein, in the event that the vehicle (20) comprises at least two electrically driven axles, the electrical energy generated during the braking process by means of a first electric machine (21) assigned to the first axle is dissipated by operating at least a second electric machine (21) assigned to the second axle in zero slip mode.

6. Method according to claim 5, wherein the electrical energy generated by means of the first electric machine (21) assigned to the first axle is directly dissipated by the at least one second electric machine (21) assigned to the second axle.

7. Method according to claim 5 or 6, wherein by means of the first electric machine (21) assigned to the first axle exactly the same quantity of electrical energy is generated as can subsequently be dissipated by the at least one second electric machine (21) assigned to the second axle.

8. Vehicle (20) with a control device and at least one electric machine (21), wherein the control device is configured, for a recuperation braking process, to dissipate electrical energy generated by a first electric machine (21) and, thereby, to prevent overcharging of a drive battery (23) of the vehicle (20), **characterised in that** the control device is configured to operate at least a second electric machine (21) of the vehicle (20) in zero slip mode, wherein a rotating field of a stator of the at least one second electric machine (21) synchronously follows a movement of a rotor of the at least one second electric machine (21), such that no-load losses of the at least one second electric machine (21) are used to dissipate electrical energy, when the drive battery (23) of the vehicle (20) is charged above a pre-set threshold value.

## Revendications

1. Procédé de freinage de récupération d'un véhicule (20), dans lequel une énergie électrique produite au moyen d'une première machine électrique (21) pendant une opération de freinage est réduite afin d'empêcher une surcharge d'une batterie de propulsion (23) du véhicule, **caractérisé en ce que** l'énergie électrique est réduite par le fonctionnement d'au moins une deuxième machine électrique (21) du véhicule (20) dans un mode zéro glissement dans lequel un champ rotatif d'un stator de la deuxième machine électrique (21) suit de manière synchrone un mouvement d'un rotor de la deuxième machine électrique (21) de telle sorte que des pertes à vide de la deuxième machine électrique (21) sont exploitées pour réduire l'énergie électrique.

2. Procédé selon la revendication 1, dans lequel de l'énergie électrique produite pendant l'opération de freinage est réduite au moyen du fonctionnement de l'au moins une deuxième machine électrique (21) dans un mode zéro glissement lorsque la batterie de propulsion (23) du véhicule (20) est chargée au-dessus d'une valeur de seuil à fournir au préalable ou est transmise à la batterie de propulsion (23) du véhicule (20) lorsque la batterie de propulsion (23) du véhicule (20) est chargée au-dessous de la valeur de seuil.

3. Procédé selon l'une quelconque des revendications précédentes, dans lequel l'énergie électrique produite pendant l'opération de freinage est d'abord transmise dans un dispositif de stockage tampon et est ensuite réduite par le fonctionnement de l'au moins une deuxième machine électrique (21) du véhicule dans un mode zéro glissement.

4. Procédé selon la revendication 3, dans lequel l'au moins une deuxième machine électrique (21) qui est commutée dans le mode zéro glissement pour la réduction de l'énergie électrique correspond à la première machine électrique (21) au moyen de laquelle l'énergie électrique a été produite pendant l'opération de freinage.

5. Procédé selon l'une quelconque des revendications précédentes, dans lequel, dans le cas où le véhicule (20) comprend au moins deux essieux à propulsion électrique, de l'énergie électrique produite pendant l'opération de freinage au moyen d'une première machine électrique (21) associée au premier essieu est réduite par le fonctionnement au moins d'une deuxième machine électrique (21) associée au deuxième essieu dans un mode zéro glissement.

6. Procédé selon la revendication 5, dans lequel l'énergie électrique produite au moyen de la première machine électrique (21) associée au premier essieu est réduite directement par l'au moins une deuxième machine électrique (21) associée au deuxième essieu.

7. Procédé selon la revendication 5 ou 6, dans lequel exactement autant d'énergie électrique que celle qui peut ensuite être réduite par l'au moins une deuxième machine électrique (21) associée au deuxième essieu est produite au moyen de la première machine électrique (21) associée au premier essieu.

8. Véhicule (20) avec un appareil de commande et avec au moins une machine électrique (21), dans lequel l'appareil de commande est configuré pour, lors d'une opération de freinage de récupération, réduire une énergie électrique produite par une première machine électrique (21) et empêcher ainsi une surcharge d'une batterie de propulsion (23) du véhicule (20), **caractérisé en ce que** l'appareil de commande est configuré pour faire fonctionner au moins une deuxième machine électrique (21) du véhicule (20) dans un mode zéro glissement dans lequel un champ rotatif d'un stator de l'au moins une deuxième machine électrique (21) suit de manière synchrone un mouvement d'un rotor de l'au moins une deuxième machine électrique (21) de telle sorte que des pertes à vide de l'au moins une deuxième machine électrique (21) sont exploitées pour réduire l'énergie électrique lorsque la batterie de propulsion (23) du véhicule (20) est chargée au-dessus d'une valeur de seuil à fournir au préalable.
